(19) Europäisches Patentamt
European Patent Office
Office européen des brevets

(11) **EP 3 081 007 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(21) Anmeldenummer: **14805845.6**

(22) Anmeldetag: **27.11.2014**

(51) Int Cl.:
***H04R 7/10*** *(2006.01)*

(86) Internationale Anmeldenummer:
**PCT/EP2014/075765**

(87) Internationale Veröffentlichungsnummer:
**WO 2015/086330 (18.06.2015 Gazette 2015/24)**

(54) **MEHRSCHICHT-LAMINAT MIT HOHER INNERER DÄMPFUNG**

MULTI-LAYER LAMINATE WITH HIGH INTERNAL DAMPING

STRATIFIÉ À PLUSIEURS COUCHES PRÉSENTANT UN AMORTISSEMENT INTERNE IMPORTANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2013 DE 102013225665**

(43) Veröffentlichungstag der Anmeldung:
**19.10.2016 Patentblatt 2016/42**

(73) Patentinhaber: **tesa SE**
**22848 Norderstedt (DE)**

(72) Erfinder:
• **BÖHM, Nicolai**
**22559 Hamburg (DE)**
• **EGGER, Michael**
**22297 Hamburg (DE)**

• **HÄNLE, Mark**
**22851 Norderstedt (DE)**
• **HERRMANN, Alexander**
**22529 Hamburg (DE)**
• **MÜSSIG, Bernhard**
**21218 Seevetal (DE)**
• **WESTPHAL, Andreas**
**21629 Neu Wulmstorf (DE)**
• **HUNGER, Falk**
**21337 Lüneburg (DE)**
• **MAATZ, Gero**
**20253 Hamburg (DE)**

(56) Entgegenhaltungen:
EP-A2- 0 191 979        WO-A1-2008/056287
CN-U- 203 206 454       DE-A1- 4 140 499
DE-A1-102012 208 477    US-A1- 2011 026 757
US-A1- 2011 272 208     US-A1- 2014 284 135

EP 3 081 007 B1

**Beschreibung**

Die Erfindung betrifft einen Mehrschicht-Verbund mit hoher innerer Dämpfung zur Herstellung von Membranen für elektroakustische Wandler.

Die Schallerzeugung in Mobiltelefonen und Smartphones zur Wiedergabe von Sprache, Klingeltönen, Musik etc. erfolgt durch kleine elektroakustische Wandler, sogenannte Mikrolautsprecher. Die Größe der Membranen solcher Mikrolautsprecher, die auch in Kopfhörern, Notebooks, LCD-Fernsehern oder Personal Digital Assistants (PDAs) eingesetzt werden, liegt typischerweise im Bereich 20 mm$^2$ bis 900 mm$^2$.

Da Mikrolautsprecher aufgrund der Design-Anforderungen an die entsprechenden elektronischen Geräte immer kleiner und flacher werden, dabei aber zusätzlich mit höherer Leistung betrieben werden, nimmt die Temperaturbelastung des Mikrolautsprechers und insbesondere seiner Membran immer mehr zu. Die Membran muss deshalb aus einem Material gefertigt sein, das auch bei hohen Temperaturen und starken mechanischen Belastungen eine hohe Lebensdauer aufweist und nicht reißt. Gleichzeitig sollte das Membranmaterial aber auch gute akustische Eigenschaften aufweisen, um dem Lautsprecher eine gute Klangqualität zu verleihen. Die allgemeinen Anforderungen an das Material einer Lautsprechermembran sind einerseits hohe Steifigkeit und geringe Dichte zur Erzeugung eines hohen Schalldrucks und der Abdeckung eines breiten Frequenzbereichs. Andererseits sollte das Material gleichzeitig eine hohe innere Dämpfung besitzen, um für einen glatten Frequenzgang zu sorgen und Verzerrungen zu minimieren. Da die Eigenschaften steif, leicht und gut gedämpft einen konstruktiven Widerspruch ergeben und nicht alle gleichzeitig erfüllt werden können (je steifer, desto geringer die Dämpfung und umgekehrt), müssen generell bei jeder Membran Kompromisse bezüglich der Steifigkeit und der Dämpfung des Membranmaterials eingegangen werden oder steife Materialien mit gut dämpfenden Materialien kombiniert werden. So beschreibt die US 7,726,441 B eine Membran aus einem Mehrschicht-Verbund aus zwei steifen Polymerfolien und einer zwischen diesen Folien liegenden dämpfenden Klebmasse-Schicht. Die Schriften DE 10 2007 030 665 A und US 8,141,676 B beschreiben jeweils einen 5-schichtigen Verbund, in dem zwei Außen- und eine Mittelschicht durch einen thermoplastischen Kleber beziehungsweise einen acrylischen Kleber voneinander getrennt sind. In solchen Mehrschicht-Membranen werden für die beiden klebenden Schichten jeweils die gleichen Klebmassen in den gleichen Dicken verwendet. Dies ist darin begründet, dass die Membran im Lautsprecher möglichst symmetrisch und gleichmäßig schwingen sollte und ein asymmetrischer Aufbau in Bezug auf die dämpfenden Klebmasse-Schichten leicht zu Verzerrungen führen kann; wodurch die Qualität des Lautsprechers gemindert würde. Weiterhin können die akustischen Eigenschaften eines Lautsprechers stark davon abhängen, mit welcher Seite verwendete Membranen asymmetrischen Aufbaus an der Spule befestigt wird. Daher haben sich symmetrische Membranen in der Verwendung für Lautsprecher durchgesetzt, um zu vermeiden, dass es durch fehlerhaften Einbau der Membran zu Qualitätsabweichungen kommt.

Die US 2011/026757 A beschreibt unter anderem dreischichtige Aufbauten mit einer inneren Stabilisierungsfolie und zwei außenliegenden Klebmassenschichten. Spezifische Angaben zur Auswahl der Schichten in Bezug zueinander sind nicht gegeben.

Die US 2011/272208 beschreibt eine Membran für elektro-akustische Wandler, die eine zentrale Schicht, an einer Seite der zentralen Schicht angebrachte erste Klebstoffschicht und erste Deckschicht und eine an der anderen Seite der mittleren Schicht angebrachte zweite Klebstoffschicht und zweite Deckschicht hat.

Die WO 2008/056287 offenbart eine Membran für eine akustische Vorrichtung, die eine erste Schicht, eine zweite Schicht und eine Klebstoffschicht zwischen der ersten und der zweiten Schicht umfasst. Die erste und die zweite Schicht haben unterschiedliche Glasübergangstemperaturen.

Die CN 203 206 454 U beschreibt eine Membran für elektro-akustische Wandler, die eine zentrale Schicht, an einer Seite der zentralen Schicht angebrachte erste Klebstoffschicht und erste Deckschicht und eine an der anderen Seite der mittleren Schicht angebrachte zweite Klebstoffschicht und zweite Deckschicht hat.Die erste und die zweite Klebeschicht sind aus verschiedenen Klebstoffen hergestellt.

Aufgabe der Erfindung ist es, Membranen insbesondere für die Herstellung von Lautsprechern, insbesondere Mikrolautsprechern, anzubieten, die in Hinblick auf ihre Dämpfungseigenschaften weiter optimiert sind und trotzdem eine gute Steifigkeit aufweisen.

Gelöst werden konnte diese Aufgabe durch solche Membranen, wie sie in den Ansprüchen dargestellt sind. Es hat sich erfindungsgemäß herausgestellt, dass die innere Dämpfung einer aus verschiedenen Klebmasse-Schichten aufgebauten Mehrschicht-Membran im Vergleich zur inneren Dämpfung einer aus gleichen Klebmasse-Schichten aufgebauten Mehrschicht-Membran erhöht werden kann und dadurch die akustische Güte eines Lautsprechers mit einer solchen Membran verbessert wird. Allerdings ist für das gewünschte Eigenschaftsprofil eine trennende Zwischenschicht zwischen den Klebemassen selbst dann erforderlich, wenn diese nicht miteinander mischbar sind und schon von daher als zwei separate Schichten vorliegen würde.

Die Erfindung betrifft dementsprechend einen Mehrschicht-Verbund insbesondere zur Herstellung von Membranen für elektro-akustische Wandler, umfassend eine erste und zweite Deckschicht, eine erste und zweite Dämpfungsschicht und eine Trennschicht, dadurch gekennzeichnet, dass die erste und zweite Dämpfungsschicht aus Klebmassen bestehen, deren Glasübergangstemperaturen sich mindestens um 10 K, bevorzugt 20 K, unterscheiden.

Als Mehrschicht-Verbund wird hierin ein aus mehreren übereinander angeordneten Schichten bestehendes insbesondere flächig ausgedehntes Material bezeichnet. Die unterschiedlichen Schichten des Verbundes können durch Verfahren wie Coextrusion, Beschichtung, Lamination oder Kaschierung, oder einer Kombination dieser Verfahren, miteinander verbunden werden. Als Mehrschicht-Membran wird hierin eine Membran insbesondere für Lautsprecher bezeichnet, wobei die Membran durch Thermoformen, Prägen, Tiefziehen oder andere formgebende Verfahren aus einem MehrschichtVerbund hergestellt wird.

Als eine entscheidende Größe für die Beurteilung der Qualität eines Lautsprechermembran-Materials ist neben der Steifigkeit die innere Dämpfung η des Materials erkannt worden. Die innere Dämpfung kann aus dem Schwingungsverhalten des Materials berechnet werden und stellt ein Maß für die akustische Güte des Materials dar. Je höher die Dämpfung des Materials, desto besser seine akustische Güte.

Ausgangspunkt der vorliegenden Erfindung war der Versuch, die innere Dämpfung eines 3-Schicht-Verbundes bestehend aus einer Polyetheretherketon- (PEEK-) Folie, einer Klebmassen-Schicht und einer zweiten PEEK-Folie, bei dem die Klebmasse-Schicht zwischen den beiden PEEK-Folien angeordnet ist, zu erhöhen. PEEK ist als Folienmaterial für solche Dreischicht-Verbunde deshalb vorteilhaft, da PEEK-Folien eine sehr hohe Temperaturbeständigkeit und Lebensdauer aufweisen. Daher werden sie für die Anwendung als Lautsprechermembran einzeln oder als Teil eines Mehrschicht-Verbundes häufig eingesetzt.

Da in einem solchen Verbund aus steifen Außenfolien und weichen Klebmasse-Schichten die innere Dämpfung in erster Linie durch die Klebmasse-Schicht in der Mitte des Verbundes beeinflusst wird, sollte in einem ersten Versuch geklärt werden, ob eine Erhöhung der inneren Dämpfung dadurch erreicht werden kann, dass statt einer mittleren Klebmasse-Schicht zwei verschiedene Klebmasse-Schichten übereinander eingesetzt werden, die sich in ihrer Dämpfung unterscheiden. Dies kann dadurch erreicht werden, dass Klebemassen mit unterschiedlichen Glasübergangstemperaturen eingesetzt werden. Die klebende Mittelschicht einer gegebenen Dicke d des Dreischicht-Verbundes sollte demnach durch zwei Klebmasse-Schichten mit jeweils halber Dicke d/2 ersetzt werden, so dass die GesamtDicke der Mittelschicht nicht verändert wird. Damit im Verbund beide Klebmassen nebeneinander vorliegen und ihre jeweiligen Dämpfungseigenschaften getrennt voneinander zur Geltung kommen, wurden für diesen Ansatz zwei untereinander nicht verträgliche Klebmassen gewählt, also solche Klebemassen, die nicht miteinander mischbar sind. Andernfalls könnte es zu einer Mischung beider Klebmassen kommen, wodurch sich die Klebmasse-Mischung makroskopisch wie eine neue Klebmasse verhalten würde. Aus diesem Grund wurden zwei nicht verträgliche, nicht miteinander mischbare Klebmassen getrennt auf je eine 8 μm dicke PEEK-Folie aufgebracht. Anschließend wurden die beiden Folien mit der mit Klebmasse beschichteten Seite zueinander zeigend durch Ausübung von Druck aufeinander laminiert, so dass die beiden Klebmasse-Schichten übereinander liegen und von den PEEK-Folien auf beiden Seiten abgedeckt sind.

Im Experiment zeigte sich, dass die innere Dämpfung eines solchen Verbundes aus zwei PEEK-Folien und zwei untereinander nicht verträglichen Klebmassen im Vergleich zu einem 3-Schicht-Verbund gleicher Dicke, bei dem jeweils nur eine der beiden Klebmassen eingesetzt wurde, kaum verbessert werden konnte.

Erstaunlicherweise führte aber das Einfügen einer zusätzlichen Folien-Schicht zwischen die beiden Klebmasse-Schichten zu einem signifikanten Anstieg der inneren Dämpfung des Verbundes. Dies ist insofern überraschend, da Kontrollexperimente zeigten, dass das einfache Einfügen einer zusätzlichen Folienschicht zwischen zwei gleiche Klebmasse-Schichten sogar einen negativen Effekt auf die innere Dämpfung hat. Dieser bei gleichen Klebemassenschichten beobachtete Effekt ist vermutlich in der Erhöhung der Steifigkeit eines solchen Verbundes begründet und deshalb auch zu erwarten.

Der erfindungsgemäß beobachtete Effekt des starken Anstiegs der inneren Dämpfung im Fall des 5-Schicht-Verbundes mit zwei verschiedenen Klebmassen und einer zusätzlichen Folienschicht kann andererseits nicht auf einer einfachen Trennung der beiden Klebmassen beruhen, da die verwendeten Klebmassen von vornherein unverträglich gewählt wurden, so dass eine Mischung per se nicht möglich ist. Ebenso wenig kann der Effekt rein auf dem Einfügen einer zusätzlichen Trennschicht beruhen, da dies im Fall von zwei gleichen Klebmassen die innere Dämpfung absenkt. Dass gerade die Kombination aus zwei nicht mischbaren Klebmassen und einer dazwischenliegenden Trennschicht einen signifikanten Anstieg der inneren Dämpfung eines solchen Verbundes zeigte, ist daher völlig unvorhersehbar.

Erfindungsgemäß hat sich herausgestellt, dass eine signifikante Erhöhung der Dämpfung auch dann zu beobachten war, wenn die beiden durch eine zusätzliche Schicht voneinander getrennten Klebmassen zwar grundsätzlich mischbar waren, aber unterschiedliche Glasübergangstemperaturen zeigten.

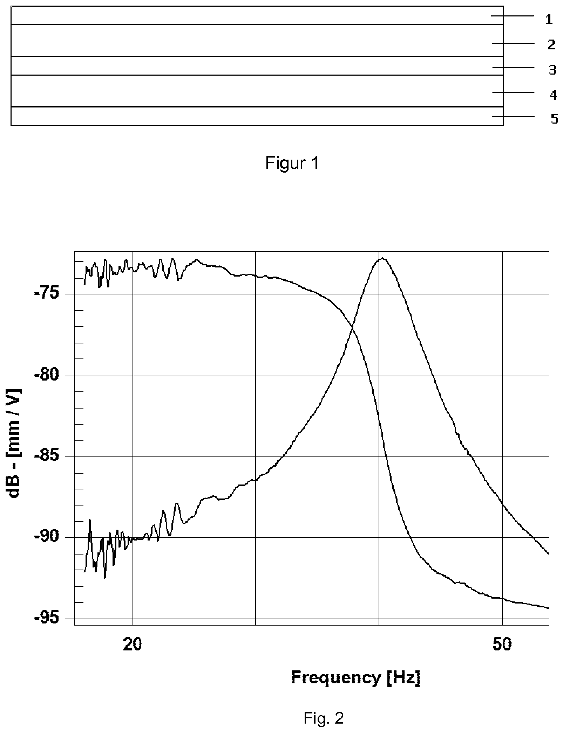

Die Bestimmung der Glasübergangstemperatur erfolgt über Dynamische Differenzkalorimetrie (DSC) nach DIN 53765. Die Angaben zur Glasübergangstemperatur $T_G$ beziehen sich auf den Glasumwandlungstemperatur-Wert Tg nach DIN 53765:1994-03, sofern im Einzelfall nichts anderes angegeben ist. Ein erfindungsgemäßer Mehrschicht-Verbund mit hoher innerer Dämpfung zur Herstellung von Membranen für elektroakustische Wandler ist in Figur 1 gezeigt. Ein solcher Verbund umfasst eine erste Deckschicht 1, eine erste Dämpfungsschicht 2, eine Trennschicht 3, eine zweite Dämpfungsschicht 4 und eine zweite Deckschicht 5.

Als Deckschichten 1 und 5 können beispielsweise Kunststoff-Folien verwendet werden, deren Hauptbestandteil (insbesondere mindestens 50 Gew-%, bevorzugt ausschließlich) ausgewählt ist aus der Gruppe Polyethylenterephthalat (PET), Polycarbonat (PC), Polybutylenterephthalat (PBT), Polyethylennaphthalat (PEN), Polyetheretherketon (PEEK), Polyetherketon (PEK), Polyaryletherketon (PAEK), Polyetherimid (PEI), Polyimid (PI), Polyarylat (PAR), Polyphenylensulfid (PPS), Polyphenylsulfon (PPSU), Polysulfon (PSU), Polyethersulfon (PES), Polyurethan (PU), Liquid-Crystal Polymer (LCP). Ebenso können Metallfolien wie beispielsweise Aluminium-Folien eingesetzt werden. Die Folien können als Flachfolien hergestellt sein oder biaxial verstreckt sein. Als besonders bevorzugt haben sich Deckschichten aus Polyetheretherketon herausgestellt.

Als Trennschicht 3 kommen prinzipiell ebenfalls Folien in Frage, deren Hauptbestandteil (insbesondere mindestens 50 Gew-%, bevorzugt ausschließlich) ausgewählt ist aus der Gruppe Polyethylenterephthalat (PET), Polycarbonat (PC), Polybutylenterephthalat (PBT), Polyethylennaphthalat (PEN), Polyetheretherketon (PEEK), Polyetherketon (PEK), Polyaryletherketon (PAEK), Polyetherimid (PEI), Polyimid (PI), Polyarylat (PAR), Polyphenylensulfid (PPS), Polyphenylsulfon (PPSU), Polysulfon (PSU), Polyethersulfon (PES), Polyurethan (PU), Liquid-Crystal Polymer (LCP).

Da die Trennschicht in der Schwingung mechanisch weniger stark beansprucht wird als die Außenschichten, und ein Erweichen der Trennschicht bei Erwärmung sogar von Vorteil sein kann, können für die Trennschicht zusätzlich auch Folien aus weniger temperaturbeständigen Materialien verwendet werden. Alternativ zu den bereits genannten Materialien kann die Folie der Trennschicht aus Kunststoffen bestehen, deren Hauptbestandteil ausgewählt ist aus der Gruppe Polyethylen [PE, LDPE (Low Density PE), MDPE (Medium Density PE), HDPE (High Density), LLDPE (Linear Low Density PE), VLDPE (Very Low Density PE)], EVA (Ethylenvinylacetat), Polypropylen (PP, PP Homopolymer, PP Random-Copolymer, PP Impact-Copolymer), Polystyrol [PS, HI-PS (High Impact PS)], EPDM (Ethylen-Propylen-Dien-Terpolymere), Styrolblockcopolymere [SBS (Styrol-Butadien-Styrol), SEBS (Styrol-Ethylen-Butylen-Styrol), SIS (Styrol-Isopren-Styrol), SEPS (Styrol-Ethylen-Propylen-Styrol)]. Ebenfalls möglich ist die Verwendung von Vliesen und Geweben, Papieren, oder Schäumen.

Die Deckschichten können aus demselben Material oder aus unterschiedlichem Material bestehen, wobei das Material der Trennschicht prinzipiell unabhängig von den Materialien der Deckschichten gewählt werden kann. Die Trennschicht kann aber auch aus demselben Material wie eine der beiden Deckschichten oder wie beide Deckschichten bestehen. Die Trennschicht 3, erste Deckschicht 1 und zweite Deckschicht 5 können aber auch alle aus unterschiedlichen Materialien bestehen.

Die Dicke der beiden Deckschichten und der Trennschicht sind voneinander unabhängig und liegen im Bereich 1-100 $\mu$m, bevorzugt 1-50 $\mu$m, besonders bevorzugt 2-30 $\mu$m. Die Dicke der Schichten kann mit einem Dickentaster ermittelt werden (DIN 53370:2006-11, Verfahren F; Normalklima). Hierfür wird für Folien ein scheibenförmiger Taster (kreisförmig) mit einem Durchmesser von 10 mm und ein Auflagegewicht von 4 N verwendet.

Als Dämpfungsschichten 2 und 4 werden Klebmassen, vorzugsweise Haftklebmassen, eingesetzt. Dies können Harz-modifizierte Acrylat-Haftklebmassen, Acrylat-Dispersionen, Synthesekautschuk-Haftklebmassen, Silikon-Haftklebmassen, PU-Haftklebmassen etc. sein.

Die Dicken der Dämpfungsschichten 2 und 4 betragen unabhängig voneinander 1-100 $\mu$m, bevorzugt 2-50 $\mu$m, besonders bevorzugt 4-30 $\mu$m. Typischerweise ist die Dicke der beiden Dämpfungsschichten größer als die Dicke der Deckschichten und als die Dicke der Trennschicht.

Die Glasübergangstemperaturen der beiden Klebmasse-Schichten 2 und 4 gemessen nach DSC (Methode wie in dieser Schrift angegeben) liegen mindestens 10 K, bevorzugt mindestens 15 K, mehr bevorzugt mindestens 20 K auseinander.

Der Verbund kann eine asymmetrische Geometrie aufweisen in dem Sinne, dass die Dicken der beiden Deckschichten und/oder die Dicken der beiden Dämpfungsschichten unterschiedlich gewählt werden, wobei bevorzugt zumindest eine der Deckschichten und/oder zumindest eine der Dämpfungsschichten im jeweiligen oben genannten Dickenbereich gewählt werden, sehr bevorzugt beide Deckschichten und/oder beide Dämpfungsschichten im jeweiligen oben genannten Dickenbereich gewählt werden.

Bevorzugt weist der Verbund unbeschadet der unterschiedlichen Natur der Dämpfungsschichten eine symmetrische Geometrie auf in dem Sinne, dass zumindest die beiden Deckschichten eine identische Dicke besitzen und/oder zumindest die beiden Dämpfungsschichten eine identische Dicke besitzen; insbesondere gewählt aus den jeweiligen oben genannten Dickenbereichen.

Bei einer besonders bevorzugten Ausführungsform besitzen die beiden Deckschichten und die Trennschicht jeweils dieselbe Dicke, und auch beide Dämpfungsschichten haben eine identische Dicke (die nicht notwendigerweise der Dicke der Deck- und Trennschicht entspricht, aber sein kann). Die Dicken sind besonders bevorzugt gewählt aus den jeweils oben genannten Bereichen.

In einer weiteren bevorzugten Ausführungsform haben die Deckschichten identische Dicken, und auch die Dämpfungsschichten haben beide dieselbe Dicke, wobei die Trennschicht dünner ist als jede der Deckschichten.

**Beispiele**

Die Bestimmung der inneren Dämpfung η der Mehrschicht-Verbunde erfolgte in Anlehnung an den Oberst Beam-Test zur Bestimmung der Vibrations-dämpfenden Eigenschaften von Materialien nach ASTM E756, nämlich wie folgt:

Ein 10mm breiter und 50 mm langer Streifen des Laminats wurde einseitig so eingespannt, dass er in einer Länge von 15 mm frei hängend schwingen konnte. Die Einspannung des Streifens erfolgte parallel zur 10 mm langen Kante, der Streifen hing mit der 15 mm langen Kante senkrecht nach unten. Der Streifen wurde anschließend durch einen unmittelbar hinter dem Streifen angeordneten Lautsprecher mit Schallwellen zur Schwingung angeregt. Die Frequenz der Schallwellen wurde dabei kontinuierlich von 2 Hz bis 2000 Hz erhöht und die Auslenkung des frei schwingenden Streifens dabei mit einem Laser aufgezeichnet. Der Laser wurde dazu so justiert, dass sein Strahl 3 mm vom unteren Rand des Streifens entfernt senkrecht und mittig auf den Streifen trifft. Die Bestimmung der Auslenkung des Streifens in der Schwingung mittels Laser erfolgt nach dem bekannten Prinzip der Lasertriangulation. (Anstelle einer akustischen Anregung könnte der Streifen auch rein mechanisch durch einen Motor zum Schwingen gebracht werden, das Prinzip der Methode bleibt dabei gleich).

Zur Auswertung wird der Quotient aus Auslenkung des Streifens und dem gemessenen Schalldruck gegen die Frequenz aufgetragen. Die Auslenkung wird wie oben beschrieben mit einem Laser bestimmt, die Frequenz und der Schalldruck der durch den Lautsprecher erzeugten Schallwellen werden gleichzeitig mit einem Mikrofon aufgezeichnet. In der resultierenden Kurve erreicht jeder Streifen bei einer für den jeweils untersuchten Mehrschicht-Verbund spezifischen und charakteristischen Frequenz ein Maximum. Die Frequenz, bei der dieses Maximum erreicht wird, wird als Resonanzfrequenz $f_0$ bezeichnet. Ebenfalls spezifisch und charakteristisch für den Mehrschicht-Verbund ist der Kurvenverlauf um dieses Maximum herum. Aus diesem Kurvenverlauf lässt sich die innere Dämpfung des Mehrschicht-Verbundes ableiten: ein steiler Anstieg und Abfall der Auslenkung des Streifens vor und hinter der Resonanzfrequenz entspricht einer geringen inneren Dämpfung, während ein flacher Kurvenverlauf um das Maximum bei $f_0$ einer hohen inneren Dämpfung entspricht. Die innere Dämpfung η wird aus der -4dB-Bandbreite $\Delta_{4dB}$ der Kurve errechnet, das heißt der Breite des Peaks 4dB unterhalb des Kurvenmaximums. Die Breite des Peaks an dieser Stelle in Hz dividiert durch die Resonanzfrequenz $f_0$ ergibt die innere Dämpfung η:

$$\eta = \Delta_{4dB} / f_0$$

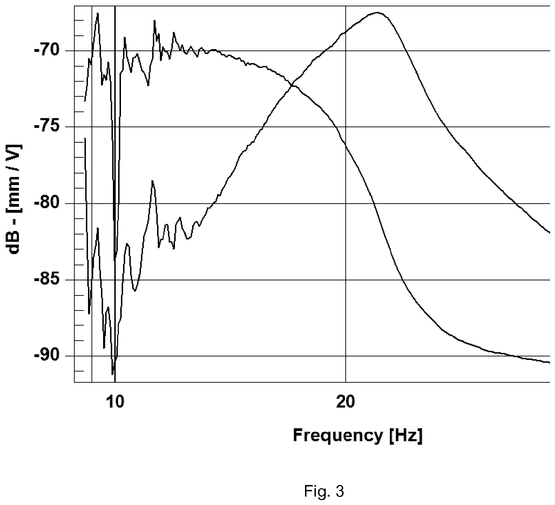

Die Figuren 2 und 3 zeigen jeweils einen beispielhaften Kurvenverlauf mit Maximum bei $f_0$ zur Erläuterung der Auswertung. Der flachere Verlauf um das Maximum im rechten Bild zeigt die höhere innere Dämpfung des entsprechenden Verbundes.

Alle Messungen fanden bei einer Temperatur von 23 °C statt, die Probenstreifen wurden vor der Messung 24 h bei 23 °C gelagert und konditioniert. Die Ergebnisse beziehen sich jeweils auf den Mittelwert aus 5 Messungen pro Muster.

**Beispiel 1**

Hergestellt wurde ein 3-Schicht-Verbund aus 8 μm dicker PEEK-Folie (Aptiv 1000-008G, Fa. Victrex), einer 30 μm dicken Schicht einer Polyacrylat-Klebmasse mit $T_g$ = - 44 °C nach DSC (DIN 53765) und einer 8 μm dicken PEEK-Folie. Der Wert für die innere Dämpfung betrug η = 0,12.

**Beispiel 2**

Hergestellt wurde ein 3-Schicht-Verbund aus 8 μm dicker PEEK-Folie, einer 30 μm dicken Schicht einer Polyacrylat-Klebmasse mit $T_g$ = -23 °C nach DSC (DIN 53765) und einer 8 μm dicken PEEK-Folie. Der Wert für die innere Dämpfung betrug η = 0,11.

**Vergleichsbeispiel 1**

Eine 8 μm dicke PEEK-Folie wurde mit 15 μm einer Polyacrylat-Klebmasse beschichtet, wie sie für Beispiel 1 beschrieben ist ($T_g$ = -44 °C). Eine zweite 8 μm dicke PEEK-Folie wurde mit 15 μm einer Polyacrylat-Klebmasse beschichtet, wie sie für Beispiel 2 beschrieben ist ($T_g$ = -23 °C). Die eingesetzten Klebmassen wurden so gewählt, dass sie miteinander nicht mischbar sind. Die beiden Verbunde aus der jeweiligen Klebemasse und der PEEK-Folie wurden bei Raumtemperatur mit den Klebemassenseiten unter Ausübung von Druck aufeinander laminiert, wobei darauf geachtet wurde, dass keine Luftblasen zwischen den beiden Klebmasse-Schichten eingeschlossen wurden. Der Wert für die innere Dämpfung betrug η = 0,13.

**Vergleichsbeispiel 2**

Eine 8 μm dicke PEEK-Folie wurde mit 15 μm einer Polyacrylat-Klebmasse beschichtet, wie sie für Beispiel 1 beschrieben ist ($T_g$ = -44 °C). Eine zweite 8 μm dicke PEEK-Folie wurde ebenfalls mit 15 μm einer Polyacrylat-Klebmasse beschichtet, wie sie für Beispiel 1 beschrieben ist ($T_g$ = -44 °C). Je einer der beiden Verbunde aus mit der Klebemasse beschichteter PEEK-Folie wurde mit der Klebmassenseite auf je eine der beiden Seiten einer 2 μm dicken PET-Folie laminiert, so dass ein 5-Schicht-Verbund aus 8 μm PEEK-Folie, 15 μm Polyacrylat-Klebmasse ($T_g$ = -44 °C; vgl. Beispiel 1), 2 μm PET-Folie, 15 μm Polyacrylat-Klebmasse ($T_g$ = -44 °C; vgl. Beispiel 1), und 8 μm PEEK-Folie resultierte. Der Wert für die innere Dämpfung betrug η = 0,08.

**Beispiel 3**

Eine 8 μm dicke PEEK-Folie wurde mit 15 μm einer Polyacrylat-Klebmasse beschichtet, wie sie für Beispiel 1 beschrieben ist ($T_g$ = -44 °C). Eine zweite 8 μm dicke PEEK-Folie wurde mit 15 μm einer Polyacrylat-Klebmasse beschichtet, wie sie für Beispiel 2 beschrieben ist ($T_g$ = -23 °C). Je einer der beiden Verbunde aus mit der Klebemasse beschichteter PEEK-Folie wurde mit der Klebmassenseite auf je eine der beiden Seiten einer 2 μm dicken PET-Folie laminiert, so dass ein 5-Schicht-Verbund aus 8 μm PEEK-Folie, 15 μm Polyacrylat-Klebmasse ($T_g$ = -44 °C; vgl. Beispiel 1), 2 μm PET-Folie, 15 μm Polyacrylat-Klebmasse ($T_g$ = -23 °C; vgl. Beispiel 2), und 8 μm PEEK-Folie resultierte. Der Wert für die innere Dämpfung betrug η = 0,19.

Zusammenstellung der Ergebnisse:

| Muster | Aufbau | Dicke | Innere Dämpfung η |
|---|---|---|---|
| Beispiel 1 | PEEK/Polyacrylat 1/PEEK | 46 μm | 0,12 |
| Beispiel 2 | PEEK/Polyacrylat 2/PEEK | 46 μm | 0,11 |
| Vgl. 1 | PEEK/Polyacrylat 1/Polyacrylat 2/PEEK | 46 μm | 0,13 |
| Vgl. 2 | PEEK/Polyacrylat 1/PET/Polyacrylat 1/PEEK | 48 μm | 0,08 |
| Beispiel 3 | PEEK/Polyacrylat 1/PET/Polyacrylat 2/PEEK | 48 μm | 0,19 |

Erfindungsgemäß zeigt sich, dass das Einbringen einer Folien-Trennschicht in die Klebemassenschicht eines Dreischichtverbundes zu einer Verschlechterung der inneren Dämpfung führt (Vergleichsbeispiel 2). Die Modifizierung einer Klebemassenschicht eines Dreischichtverbundes zu einer Doppelschicht aus zwei halb dicken, nicht mischbaren Klebemassenschichten mit unterschiedlichen Glasübergangstemperaturen führte nur zu einer geringen Dämpfungsverbesserung (Vergleichsbeispiel 1). Erst die Umsetzung beider Maßnahmen führte in nicht vorhersehbarer Weise zu einer signifikanten Verbesserung der inneren Dämpfung des Verbundes (Beispiel 3).

**Patentansprüche**

1. Mehrschicht-Verbund zur Herstellung von Membranen für elektroakustische Wandler, umfassend eine erste und zweite Deckschicht, eine erste und zweite Dämpfungsschicht und eine Trennschicht, wobei
die erste und zweite Dämpfungsschicht aus Klebmassen bestehen,
**dadurch gekennzeichnet, dass** die Glasübergangstemperaturen $T_G$, gemessen nach dem Dynamischen Differenzkalorimetrie-Verfahren (DSC), der Klebmassen der ersten und der zweiten Dämpfungsschicht sich mindestens um 10 K unterscheiden.

2. Mehrschicht-Verbund nach Anspruch 1, **dadurch gekennzeichnet, dass**
die Glasübergangstemperaturen $T_G$ (DSC) der Klebmassen der ersten und der zweiten Dämpfungsschicht sich mindestens um 15 K unterscheiden.

3. Mehrschicht-Verbund nach einem der vorangehenden Ansprüche, **dadurch gekennzeichnet, dass**
die erste und/oder zweite Deckschicht aus einem Material bestehen, dessen Hauptbestandteil ausgewählt ist aus der Gruppe bestehend aus Polyethylenterephthalat (PET), Polycarbonat (PC), Polybutylenterephthalat (PBT), Polyethylennaphthalat (PEN), Polyetheretherketon (PEEK), Polyetherketon (PEK), Polyetherimid (PEI), Polyimid (PI), Polyarylat (PAR), Polyphenylensulfid (PPS), Polyphenylsulfon (PPSU), Polysulfon (PSU), Polyethersulfon (PES), Polyurethan (PU), Liquid-Crystal Polymer (LCP).

**4.** Mehrschicht-Verbund nach einem der vorangehenden Ansprüche, **dadurch gekennzeichnet, dass** die Dicke der ersten und/oder der zweiten Deckschicht 1-100 $\mu$m beträgt.

**5.** Mehrschicht-Verbund nach einem der vorangehenden Ansprüche, **dadurch gekennzeichnet, dass** die Trennschicht aus einem Material besteht, dessen Hauptbestandteil ausgewählt ist aus der Gruppe bestehend aus Polyethylenterephthalat (PET), Polycarbonat (PC), Polybutylenterephthalat (PBT), Polyethylennaphthalat (PEN), Polyetheretherketon (PEEK), Polyetherketon (PEK), Polyetherimid (PEI), Polyimid (PI), Polyarylat (PAR), Polyphenylensulfid (PPS), Polyphenylsulfon (PPSU), Polysulfon (PSU), Polyethersulfon (PES), Polyurethan (PU), Liquid-Crystal Polymer (LCP).

**6.** Mehrschicht-Verbund nach einem der vorangehenden Ansprüche, **dadurch gekennzeichnet, dass** die Trennschicht aus einem Material besteht, dessen Hauptbestandteil ausgewählt ist aus der Gruppe bestehend aus Polyethylen, EVA (Ethylenvinylacetat), Polypropylen, Polystyrolen, EPDM (Ethylen-Propylen-Dien-Terpolymere), Styrolblockcopolymeren.

**7.** Mehrschicht-Verbund nach einem der vorangehenden Ansprüche, **dadurch gekennzeichnet, dass** die Trennschicht aus einem Vlies, einem Gewebe, einem Papier, einem Schaum oder einem Mehrschichtverbund aus zwei oder mehreren Schichten aus den vorgenannten Materialien besteht.

**8.** Mehrschicht-Verbund nach einem der vorangehenden Ansprüche, **dadurch gekennzeichnet, dass** die Dicke der Trennschicht 1-100 $\mu$m beträgt.

**9.** Mehrschicht-Verbund nach einem der vorangehenden Ansprüche, **dadurch gekennzeichnet, dass** eine oder beide Dämpfungsschichten Haftklebmassen sind.

**10.** Mehrschicht-Verbund nach einem der vorangehenden Ansprüche, **dadurch gekennzeichnet, dass** eine oder beide Dämpfungsschichten Schmelzklebemassen sind.

**11.** Mehrschicht-Verbund nach einem der vorangehenden Ansprüche, **dadurch gekennzeichnet, dass** die Dicke einer oder beider Dämpfungsschichten 1-100 $\mu$m betragen.

**12.** Membran aus einem Mehrschicht-Verbund nach einem der Ansprüche 1 bis 11.

**13.** Verwendung von Mehrschicht-Verbünden nach einem der Ansprüche 1 bis 11 zur Herstellung von Membranen für elektroakustische Wandler.

**Claims**

**1.** Multilayer assembly for producing membranes for electroacoustic transducers, comprising first and second outer layers, first and second damping layers, and a parting layer, wherein the first and second damping layers consist of adhesives, **characterized in that** the glass transition temperatures $T_g$ of the adhesives of the first and second damping layers, as measured by differential scanning calorimetry (DSC), differ by at least 10 K.

**2.** Multilayer assembly according to Claim 1, **characterized in that** the glass transition temperatures $T_g$ (DSC) of the adhesives of the first and second damping layers differ at least by 15 K.

**3.** Multilayer assembly according to either of the preceding claims, **characterized in that** the first and/or second damping layers consist of a material whose principal constituent is selected from the group consisting of polyethylene terephthalate (PET), polycarbonate (PC), polybutylene terephthalate (PBT), polyethylene naphthalate (PEN), polyetheretherketone (PEEK), polyetherketone (PEK), polyetherimide (PEI), polyimide (PI), polyarylate (PAR), polyphenylene sulfide (PPS), polyphenylsulfone (PPSU), polysulfone (PSU), polyethersulfone (PES), polyurethane (PU), liquid-crystal polymer (LCP).

4. Multilayer assembly according to any of the preceding claims, **characterized in that** the thickness of the first and/or second outer layers is 1-100 $\mu$m.

5. Multilayer assembly according to any of the preceding claims, **characterized in that** the parting layer consists of a material whose principal constituent is selected from the group consisting of polyethylene terephthalate (PET), polycarbonate (PC), polybutylene terephthalate (PBT), polyethylene naphthalate (PEN), polyetheretherketone (PEEK), polyetherketone (PEK), polyetherimide (PEI), polyimide (PI), polyarylate (PAR), polyphenylene sulfide (PPS), polyphenylsulfone (PPSU), polysulfone (PSU), polyethersulfone (PES), polyurethane (PU), liquid-crystal polymer (LCP).

6. Multilayer assembly according to any of the preceding claims, **characterized in that** the parting layer consists of a material whose principal constituent is selected from the group consisting of polyethylene, EVA (ethylene-vinyl acetate), polypropylene, polystyrenes, EPDM (ethylene-propylene-diene terpolymers), styrene block copolymers.

7. Multilayer assembly according to any of the preceding claims, **characterized in that** the parting layer consists of a nonwoven, a woven fabric, a paper, a foam, or of a multilayer assembly of two or more layers of the aforesaid materials.

8. Multilayer assembly according to any of the preceding claims, **characterized in that** the thickness of the parting layer is 1-100 $\mu$m.

9. Multilayer assembly according to any of the preceding claims, **characterized in that** one or both damping layers are pressure-sensitive adhesives.

10. Multilayer assembly according to any of the preceding claims, **characterized in that** one or both damping layers are hotmelt adhesives.

11. Multilayer assembly according to any of the preceding claims, **characterized in that** the thickness of one or both damping layers is 1-100 $\mu$m.

12. Membrane from a multilayer assembly according to any of Claims 1 to 11.

13. Use of multilayer assemblies according to any of Claims 1 to 11 for producing membranes for electroacoustic transducers.

**Revendications**

1. Composite multicouche pour la fabrication de membranes pour transformateur électro-acoustique, comprenant une première et une deuxième couche de recouvrement, une première et une deuxième couche d'amortissement et une couche de séparation,
la première et la deuxième couche d'amortissement étant constituées par des matériaux adhésifs,
**caractérisé en ce que** les températures de transition vitreuses $T_G$, mesurées par le procédé de calorimétrie différentielle dynamique (DSC), des matériaux adhésifs de la première et de la deuxième couche d'amortissement diffèrent d'au moins 10 K.

2. Composite multicouche selon la revendication 1, **caractérisé en ce que** les températures de transition vitreuse $T_G$ (DSC) des matériaux adhésifs de la première et de la deuxième couche d'amortissement diffèrent d'au moins 15 K.

3. Composite multicouche selon l'une quelconque des revendications précédentes, **caractérisé en ce que** la première et/ou la deuxième couche de recouvrement sont constituées par un matériau dont le constituant principal est choisi dans le groupe constitué par le polytéréphtalate d'éthylène (PET), le polycarbonate (PC), le polytéréphtalate de butylène (PBT), le polynaphtalate d'éthylène (PEN), la polyéther-éther-cétone (PEEK), la polyéther-cétone (PEK), le polyéther-imide (PEI), le polyimide (PI), le polyarylate (PAR), le polysulfure de phénylène (PPS), la polyphénylsulfone (PPSU), la polysulfone (PSU), la polyéther-sulfone (PES), le polyuréthane (PU), le polymère cristallin liquide (LCP).

**4.** Composite multicouche selon l'une quelconque des revendications précédentes, **caractérisé en ce que** l'épaisseur de la première et/ou de la deuxième couche de recouvrement est de 1 à 100 $\mu$m.

**5.** Composite multicouche selon l'une quelconque des revendications précédentes, **caractérisé en ce que** la couche de séparation est constituée par un matériau dont le constituant principal est choisi dans le groupe constitué par : le polytéréphtalate d'éthylène (PET), le polycarbonate (PC), le polytéréphtalate de butylène (PBT), le polynaphtalate d'éthylène (PEN), la polyéther-éther-cétone (PEEK), la polyéther-cétone (PEK), le polyéther-imide (PEI), le polyimide (PI), le polyarylate (PAR), le polysulfure de phénylène (PPS), la polyphénylsulfone (PPSU), la polysulfone (PSU), la polyéther-sulfone (PES), le polyuréthane (PU), le polymère cristallin liquide (LCP).

**6.** Composite multicouche selon l'une quelconque des revendications précédentes, **caractérisé en ce que** la couche de séparation est constituée par un matériau dont le constituant principal est choisi dans le groupe constitué par : le polyéthylène, l'EVA (éthylène-acétate de vinyle), le polypropylène, les polystyrènes, l'EPDM (terpolymère d'éthylène-propylène-diène), les copolymères séquencés de styrène.

**7.** Composite multicouche selon l'une quelconque des revendications précédentes, **caractérisé en ce que** la couche de séparation est constituée par un non-tissé, un tissu, un papier, une mousse ou un composite multicouche de deux ou davantage de couches des matériaux susmentionnés.

**8.** Composite multicouche selon l'une quelconque des revendications précédentes, **caractérisé en ce que** l'épaisseur de la couche de séparation est de 1 à 100 $\mu$m.

**9.** Composite multicouche selon l'une quelconque des revendications précédentes, **caractérisé en ce qu'**une ou les deux couches d'amortissement sont des matériaux adhésifs sensibles à la pression.

**10.** Composite multicouche selon l'une quelconque des revendications précédentes, **caractérisé en ce qu'**une ou les deux couches d'amortissement sont des matériaux adhésifs thermofusibles.

**11.** Composite multicouche selon l'une quelconque des revendications précédentes, **caractérisé en ce que** l'épaisseur d'une ou des deux couches d'amortissement est de 1 à 100 $\mu$m.

**12.** Membrane constituée par un composite multicouche selon l'une quelconque des revendications 1 à 11.

**13.** Utilisation de composites multicouches selon l'une quelconque des revendications 1 à 11 pour la fabrication de membranes pour transformateur électro-acoustique.

Figur 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7726441 B
- DE 102007030665 A
- US 8141676 B
- US 2011026757 A
- US 2011272208 A
- WO 2008056287 A
- CN 203206454 U